# EUROPÄISCHE PATENTSCHRIFT

(11) **EP 0 836 970 B1**
(45) Veröffentlichungstag und Bekanntmachung des Hinweises auf die Patenterteilung: **12.04.2000**
(21) Anmeldenummer: 97113915.9
(22) Anmeldetag: 12.08.1997
(51) Int. Cl.: B60R 21/22

(54) **Airbagvorrichtung**
Air bag device
Dispositif de sac de sécurité gonflable

(30) Priorität: 18.10.1996 DE 19642964
(43) Veröffentlichungstag der Anmeldung: 22.04.1998
(73) Patentinhaber: TRW Occupant Restraint Systems GmbH & Co. KG, 73551 Alfdorf (DE)
(72) Erfinder: Kretschmer, Jürgen, Dr., 73734 Esslingen (DE); Schmale, Reinhard, 42279 Wuppertal (DE); Möller, Klaus, 42389 Wuppertal (DE)
(74) Vertreter: Degwert, Hartmut, Dipl.-Phys.

(56) Entgegenhaltungen:
- EP-A- 0 694 444
- DE-U- 29 603 316
- DE-U- 29 613 781

## Beschreibung

Die Erfindung bezieht sich auf eine Airbagvorrichtung für ein Kraftfahrzeug.

Airbagvorrichtungen sind in den verschiedensten Ausführungsformen bekannt geworden und bieten einen wirksamen Schutz eines Fahrzeuginsassen bei einem Fahrzeugunfall.

Die Erfindung geht aus von einer Airbagvorrichtung für ein Kraftfahrzeug mit einem aus einem aufblasbaren Gaskissen bestehenden Airbag, einem Gasgenerator zum Befüllen des Airbags, einem sich durch den Airbag erstreckenden Gasführungsrohr, das mit Aufblasöffnungen versehen ist, und mit einer Umhüllung, worin der in gestapelte Faltungen gelegte Airbag nebst Gasführungsrohr aufgenommen ist. Eine solche Vorrichtung ist aus der EP-A-0 694 441 bekannt.

Der Erfindung liegt die Aufgabe zugrunde, ein vormontiertes, modulares, aktives Kopfschutz( Airbag -)System für Kraftfahrzeuge zur Verfügung zu stellen.

Gemäß einem ersten Aspekt der Erfindung wird eine Airbagvorrichtung nach Anspruch 1 geschaffen. Die das Gasführungsrohr und den Airbag innerhalb des Schußkanals aufnehmende Profilleiste kann ein herstellungstechnisch einfaches, insbesondere auch kostengünstiges Bauteil sein.

Gemäß einem weiteren Aspekt der Erfindung wird eine Airbagvorrichtung nach Anspruch 2 geschaffen. Die Umhüllung bildet dabei einen Schußkanal, der die Entfaltungsrichtung des Airbags vorgibt.

Gemäß einem weiteren Aspekt der Erfindung wird eine Airbagvorrichtung nach Anspruch 3 geschaffen. Die Profilleiste besteht vorzugsweise aus einem thermoplastischen Kunststoff, wie PP, PP-EPDM, TPE oder PVC.

Gemäß einem weiteren Aspekt der Erfindung wird eine Airbagvorrichtung nach Anspruch 4 geschaffen. Die Verwendung eines Schrumpfschlauchs ermöglicht eine Verdämmung des Airbags.

Gemäß einem weiteren Aspekt der Erfindung wird eine Airbagvorrichtung nach Anspruch 5 geschaffen. Die zunächst divergierenden Schenkel erleichtern die Montage, also das Einbringen von Gasführungsrohr und Airbag in den Schußkanal wesentlich und lassen sich problemlos mittels einfacher, zum Stande der Technik gehörender Hilfsvorrichtungen in die gewünschte Ausrichtung, wie Parallellage überführen.

Besondere Vorteile der Erfindung sind darin zu sehen, daß durch den Schußkanal die Entfaltungsrichtung des Airbags vorgegeben ist, daß eine linienförmige Abstützung des Airbags beim Entfaltungsvorgang und dadurch eine gleichmäßige Entfaltung vorliegt und daß der Profilleisteneinbauort frei wählbar ist, da die Eigensteifigkeit der Airbagvorrichtung über die Werkstoffauswahl und die Werkstoffkombination für die Profilleiste in weiten Grenzen variierbar ist.

Mit Vorteil kann sich die Profilleiste mit Airbag und Gasführungsrohr jeweils längs einer Fahrzeugseite von der A-Säule bis zur C-Säule erstrecken und im Übergangsbereich vom Fahrzeugdach und einer Fahrzeugseitenwand an der Fahrzeugkarosserie angeordnet sein.

Eine besonders zweckmäßige Weiterbildung der Erfindung besteht darin, daß die Profilleiste durch ein eingelagertes, aus Metall, wie Stahl oder Aluminium, bestehendes Gerüstband ausgesteift ist. Damit ist die Airbagvorrichtung im gesamten von der Abnehmerschaft geforderten Temperaturbereich (- 40°C bis + 120°C) einsetzbar, da die mechanischen Eigenschaften im wesentlichen durch das metallische Gerüstband bestimmt werden.

Weiterhin ist die Verdämmung, d.h. der Widerstand, den der Airbag beim Entfalten überwinden muß, in weiten Grenzen variierbar, und zwar über das durch das in der Profilleiste eingelagerte Gerüstband, durch den Winkel zwischen den Flanken (Profilschenkeln) und weiterhin dadurch, daß die Profilleiste Mittel zum Verschließen der Profilöffnung bzw. des Schußkanals aufweist. Hierfür kann vorgesehen sein, daß die Profilleiste öffnungsseitig eine durchlaufende Verschlußlippe aufweist, die insbesondere auch eine durchlaufende, z.B. durch Perforation gebildete Aufreißnaht aufweisen kann.

Eine weitere zweckmäßige Ausgestaltung der Erfindung sieht vor, daß die Schenkel der Profilleiste vom Gasführungsrohr bei der Montage überwindbare Wülste oder dgl. zur Lagesicherung des Gasführungsrohrs aufweisen.

Das Gasführungsrohr wie auch die Profilleiste sollten eine der Karosseriekontur folgende Konfiguration aufweisen, was dadurch realisiert werden kann, daß das Gasführungsrohr wie ggf. auch die Profilleiste, gebogen, wie streckgebogen ausgeführt sind. Beim Biegen der Profilleiste ist darauf zu achten, daß deren Öffnungsquerschnitt über die gesamte axiale Erstreckung unverändert bleibt.

Die Befestigungselemente für die Airbagvorrichtung bestehen zweckmäßigerweise aus einfachen, an der Profilleiste oder an der Karossereie vormontierbaren, in Reihe nebeneinander angeordneten Klammern, welche aus Kunststoff, bevorzugt aber aus Metall, wie Federblech gebildet sein sollten.

Wichtig ist, daß der gefaltete Airbag eine die Abspannlinie bei entfalteten Airbag definierende Bandsicherung aufweist.

Ein Ausführungsbeispiel der Erfindung wird nachfolgend anhand der Zeichnung näher erläutert, und es zeigen:
- Fig. 1: eine komplette Airbagvorrichtung mit einer durch dünnere Linien angedeuteten Fahrzeugkarosserie,
- Fig 2: einen Schnitt, etwa folgend der Linie A-A in Fig. 1,
- Fig. 3: einen Schnitt durch die Airbagvorrichtung gemäß einer ersten Ausführungsform und
- Fig. 4: einen Schnitt durch die Airbagvorrichtung gemäß einer zweiten Ausführungsform.

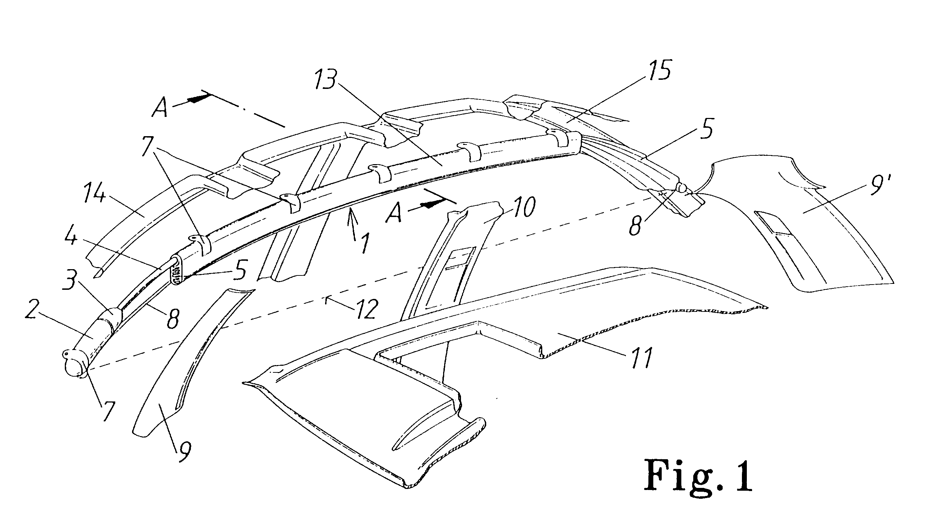

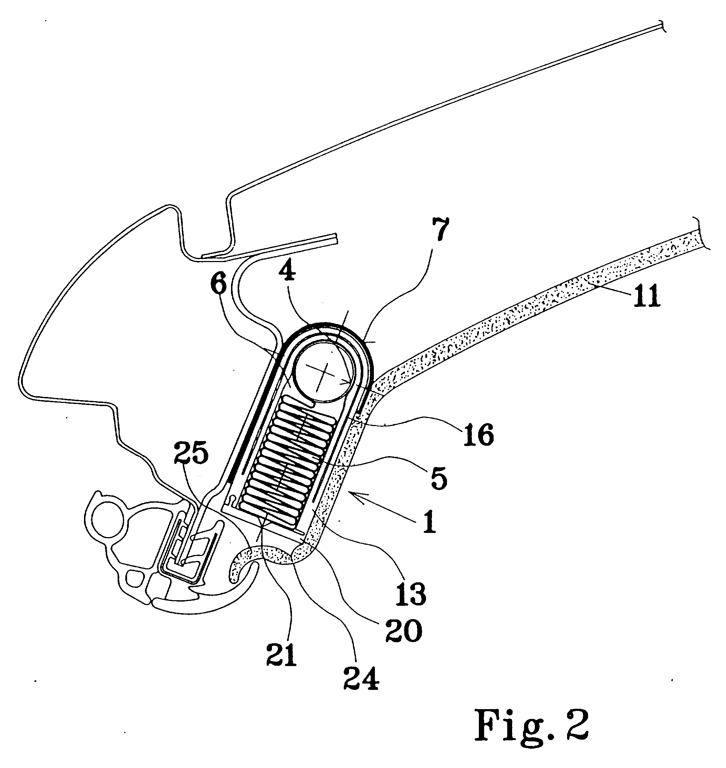

Die neue Airbagvorrichtung ist ein mit dem Bezugszeichen 1 versehenes Kopfschutzmodul; welches im Übergangsbereich vom Fahrzeugdach zu jeder Fahrzeugseitenwand in einer aus Fig. 1 und 2 ersichtlichen Weise anzuordnen ist. Das Kopfschutzmodul besteht aus einem Gasgenerator 2, einem Adapter 3 zur Herstellung einer Verbindung zwischen dem Gasgenerator 2 und einem Gasführungsrohr 4, einem gefalteten Airbag 5 und einer mit einem Schußkanal 6 ausgebildeten Profilleiste 13. Die Airbagvorrichtung erstreckt sich von der A-Säule 14 (Armaturentafelbereich) bis zu C-Säule 15 und ist dem Karosserieverlauf angepaßt. Die Airbagvorrichtung ist mittels Klammern 7 an der Fahrzeugkarosserie zu befestigen wobei die Klammern 7, die aus Federblech bestehen können, an der Karosserie oder an der Airbagvorrichtung vormontierbar sind. Halte-/Abspannbänder 8 definieren eine Abspannlinie 12.

In Fig. 1 sind der Vollständigkeit halber eine modifizierte Säulenverkleidung 9 für die A-Säule 14, eine modifizierte Säulenverkleidung 9' für die C-Säule, eine B-Säulenverkleidung 10 und ein Formhimmel 11 dargestellt.

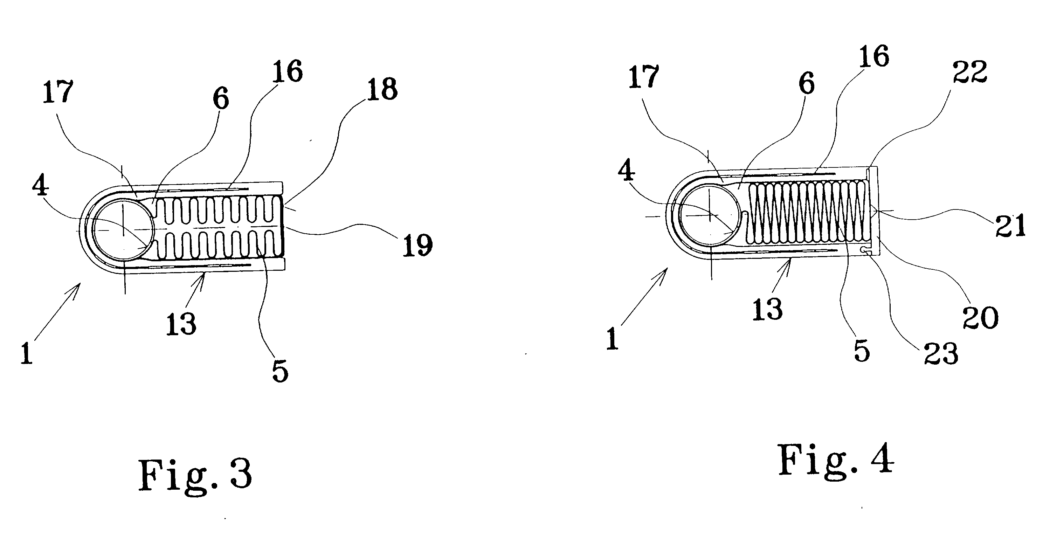

Fig. 3 zeigt einen Querschnitt der Airbagvorrichtung und läßt erkennen, daß der Schußkanal 6 in einer Profilleiste 13 ausgebildet ist, die einen U-förmigen Querschnitt mit zwei Schenkeln und einen diese miteinander verbindenden Steg aufweist. Die Profilleiste 13 besteht zweckmäßigerweise aus einem thermoplastischen Kunststoffmaterial und ist im Spritzguß- oder Extrusionsverfahren erstellt. Ein eingelagertes Gerüstband 16 vermittelt der Profilleiste 13 eine den technischen Anforderungen genügende Steifigkeit. Innerhalb des Schußkanals 6 ist das Gasführungsrohr 4 und der in Faltungen gestapelte Airbag 5 aufgenommen. Das Gasführungsrohr 4 sitzt in einem abgeteilten Bereich des Airbags, der durch Abnähen gebildet sein kann. Nicht gezeigte Ausblasöffnungen im Gasführungsrohr 4 sind auf den gefalteten Airbag hin ausgerichtet, um diesen im Badarfsfall zu entfalten bzw. schlagartig aufzublasen.

Innerhalb des Schußkanals 6 weisen die Schenkel der Profilleiste 13 den Schußkanal 6 verengende Wülste 17 auf. Die Wülste 17 sind beim Einbringen des Gasführungsrohrs 4 von diesem leicht überwindbar, sichern dann aber seine Position innerhalb des Schußkanals 6.

Im Ausführungsbeispiel nach Fig. 3 ist der Schußkanal 6 offen ausgebildet. Demgegenüber ist der in Falten gelegte Airbag 5 von einem Schrumpfschlauch 18 umfaßt, der im Bereich der Schußkanalöffnung eine Aufreißnaht 19 aufweist. Die Aufreißnaht 19 ist so ausgelegt, daß sie sich bei einem bestimmten Füllgasdruck öffnet und sich der Airbag 5 ins Fahrzeuginnere hinein entfalten kann.

Beim Ausführungsbeispiel nach Fig. 4 besteht der Unterschied gegenüber dem nach Fig. 3 im wesentlichen darin, daß der Schußkanal 6 durch eine Verschlußlippe 20 verschlossen und der Airbag 5 nicht von einem Schrumpfschlauch 18 umgeben ist. Hier übt also die Verschlußlippe 20 auf das erzeugte Füllgas eine Dämmwirkung aus. Bei einem bestimmten Füllgasdruck kann sich die Verschlußlippe 20, z.B. entlang einer darin ausgebildeten Aufreißnaht 21 öffnen.

Die Verschlußlippe 20 kann bei 22 an der Profilleiste 13 z.B. nach Art eines Filmscharniers angeformt sein und bei 23 eine Fügeverbindung z.B. Klipsverbindung mit der Profilleiste 13 eingehen.

Aus Fig. 2 ergibt sich die Anordnung der neuen Airbagvorrichtung in einem Fahrzeug und die Ausrichtung des Schußkanals 6, die ein Entfalten des Airbags in eine Position ermöglicht, die einen Kopfschutz für einen Fahrzeuginsassen gewährleistet. Bei der gewollten und dargestellten Airbagvorrichtung kommt der aufgeblasene Airbag zwischen dem Kopf eines Fahrzeuginsassen und der diesen benachbarten Seitenscheibe eines Fahrzeugs zur Wirkung, so daß der Fahrzeuginsasse mit dem Kopf weder gegen die Seitenscheibe noch gegen harte Rahmenbereiche der Karosserie aufprallen kann.

Die Airbagvorrichtung kann, wie in Fig. 2 gezeigt, vom Formhimmel 11 abgedeckt sein, wobei eine Sollknickstelle 24 im Formhimmel 11 sicherstellt, daß ein Randbereich 25 beim Entfalten des Airbags augenblicklich den Schußkanal 6 freigibt.

Im folgenden wird eine Montagereihenfolge kurz erläutert.

### Beispiel 1:

- Herstellen des Airbags durch Nähen eines Kissens mit Abnäher zur Schaffung einer Einschubröhre für das Gasfüllrohr.
- Airbag gestreckt falten.
- Faltung sichern mit Schrumpfschlauch, wobei die Folie mit einer Aufreißnaht zu versehen ist.
- Gasführungsrohr nach Kontur/Karosserie biegen (streckbiegen) und Ausblasöffnungen (vorzugsweise) in Biegevorrichtung ausstanzen.
- Gebogenes Gasführungsrohr in die Airbag/Schrumpfschlaucheinheit einschieben.
- Endlos extrudierte Profilleiste fertigen, auf Sollänge ablängen und ggf. in Karosseriekontur biegen (streckbiegen).
- Vormontageeinheit (Gasführungsrohr, Airbag, Schrumpfschlauch) in den Schußkanal der Profilleiste einbringen und durch Rollvorgang Hinterschnitte um das Gasführungsrohr legen, bei gleichzeitiger gewollter Ausrichtung der Profilschenkel.
- Gasgenerator über Adapter an Gasführungsrohr befestigen.
- Modul in Klemmklammern (an Karosserie) einschieben.
- Modul an Gasgeneratorhalterung und an überstehendem Gasführungsrohr durch Schrauben an Karosserie fixieren und sichern.

### Beispiel 2:

- Herstellen des Airbags durch Nähen eines Kissens mit Abnäher zur Schaffung einer Einschubröhre für das Gasfüllrohr.
- Airbag gestreckt falten.
- Faltung punktuell sichern mit Bändern.
- Gasführungsrohr nach Kontur/Karosserie biegen (streckbiegen) und Ausblasöffnungen (vorzugsweise) in Biegevorrichtung ausstanzen.
- Gebogenes Gasführungsrohr in Airbag/Bandsicherung einschieben.
- Endlos extrudierte Profilleiste mit Verschlußlippe fertigen, auf Sollänge ablängen und ggf. in Karosseriekontur biegen (streckbiegen).
- Vormontageeinheit (Gasführungsrohr, Airbag) in den Schußkanal der Profilleiste einbringen und durch Rollvorgang Hinterschnitte um das Gasführungsrohr legen, bei gleichzeitiger gerollter Ausrichtung der Profilschenkel.
- Verschlußlippe in Hinterschnitt einklipsen.
- Gasgenerator über Adapter an Gasführungsrohr befestigen.
- Modul in Klemmklammern (an Karosserie) einschieben.
- Modul an Gasgeneratorhalterung und an überstehendem Gasführungsrohr durch Schrauben an Karosserie fixieren und sichern.

## Patentansprüche

1. Airbagvorrichtung für ein Kraftfahrzeug mit einem aus einem aufblasbaren Gaskissen bestehenden Airbag (5),
- einem Gasgenerator (2) zum Befüllen des Airbags (5),
- einem sich durch den Airbag (5) erstreckenden Gasführungsrohr (4), das mit Aufblasöffnungen versehen ist, und mit einer Umhüllung, worin der in gestapelte Faltungen gelegte Airbag (5) nebst Gasführungsrohr (4) aufgenommen ist,
dadurch gekennzeichnet, daß die Umhüllung eine Profilleiste (13) von U-förmigem Querschnitt mit zwei parallelen Schenkeln und einem diese miteinander verbindenden Steg aufweist, der an die Form des sich darin abstützenden Gasführungsrohres (4) angepaßt ist, und daß die Profilleiste (13) mit Airbag (5) und Gasführungsrohr (4) eine vormontierte eigensteife Baueinheit bildet, die durch Befestigungselemente (7) an einer Fahrzeugkarosserie befestigbar ist.

2. Airbagvorrichtung für ein Kraftfahrzeug mit einem aus einem aufblasbaren Gaskissen bestehenden Airbag (5), einem Gasgenerator (2) zum Befüllen des Airbags (5) und einer Umhüllung, worin der in gestapelte Faltungen gelegte Airbag (5) aufgenommen ist,
dadurch gekennzeichnet, daß die Umhüllung eine Profilleiste (13) von U-förmigem Querschnitt mit zwei parallelen Schenkeln und einem diese miteinander verbindenden Steg aufweist und einen Schußkanal bildet, der die Entfaltungsrichtung des Airbags (5) vorgibt.

3. Airbagvorrichtung für ein Kraftfahrzeug mit einem aus einem aulblasbaren Gaskissen bestehenden Airbag (5), einem Gasgenerator (2) zum Befüllen des Airbags (5) und einer Umhüllung, worin der in gestapelte Faltungen gelegte Airbag (5) aufgenommen ist,
dadurch gekennzeichnet, daß die Umhüllung eine als spritzgegossenes Kunststoffteil ausgebildete Profilleiste (13) von U-förmigem Querschnitt mit zwei parallelen Schenkeln und einem diese verbindenden Steg sowie einer an einem freien Schenkelende angeformten Verschlußlippe (20) aufweist.

4. Airbagvorrichtung für ein Kraftfahrzeug mit einem aus einem aufblasbaren Gaskissen bestehenden Airbag (5), einem Gasgenerator (2) zum Befüllen des Airbags (5),
- einem sich durch den Airbag (5) erstreckenden Gasführungsrohr (4), das mit Ausblasöffnungen versehen ist, und mit einer Umhüllung, worin der in gestapelte Faltungen gelegte Airbag (5) nebst Gasführungsrohr (4) aufgenommen ist,
dadurch gekennzeichnet, daß die Umhüllung eine Profilleiste (13) von U-förmigem Querschnitt mit zwei parallelen Schenkeln und einem diese verbindenden Steg aufweist, daß um das Gasführungsrohr (4) und den gefalteten Airbag (5) herum ein Schrumpfschlauch (18) angeordnet ist, der eine definierte Aufreißnaht (19) aufweist, und daß der gefaltete Airbag (5) mit dem Gasführungsrohr (4) und dem um diese herum angeordneten Schrumpfschlauch (18) eine in die Profilleiste (13) einbringbare Vormontageeinheit bildet.

5. Airbagvorrichtung für ein Kraftfahrzeug mit einem aus einem aufblasbaren Gaskissen bestehenden Airbag (5), einem Gasgenerator (2) zum Befüllen des Airbags (5),
- einem sich durch den Airbag (5) erstreckenden Gasführungsrohr (4) das mit Ausblasöffnungen versehen ist, und mit einer Umhüllung, worin der in gestapelte Faltungen gelegte Airbag (5) nebst Gasführungsrohr (4) aufgenommen ist,
dadurch gekennzeichnet, daß die Umhüllung eine Profilleiste (13) von U-förmigem Querschnitt mit zwei parallelen Schenkeln und einem diese miteinander verbindenden Steg aufweist, und daß die Schenkel der Profilleiste (13) vor dem Einbringen von Airbag (5) und Gasführungsrohr (4) in die Profilleiste (13) divergieren sowie nach dem Einbringen von Gasführungsrohr (4) und Airbag (5) etwa parallel zueinander ausgerichtet sind.

6. Airbagvorrichtung nach einem der vorstehenden Ansprüche, dadurch gekennzeichnet, daß sich die Profilleiste (13) mit Airbag (5) und Gasführungsrohr (4) jeweils längs einer Fahrzeugseite von der A-Säule (14) bis zur C-Säule (15) erstreckt und im Übergangsbereich vom Fahrzeugdach und einer Fahrzeugseitenwand an der Fahrzeugkarosserie angeordnet ist.

7. Airbagvorrichtung nach Anspruch 3, dadurch gekennzeichnet, daß die Profilleiste (13) aus einem thermoplastischen Kunststoff, wie PP, PP-EPDM, TPE oder PVC besteht.

8. Airbagvorrichtung nach Anspruch 7, dadurch gekennzeichnet, daß die Profilleiste (13) durch ein eingelagertes, aus Metall, wie Stahl oder Aluminium bestehendes Gerüstband (16) ausgesteift ist.

9. Airbagvorrichtung nach Anspruch 3, dadurch gekennzeichnet, daß die Verschlußlippe (20) eine durchlaufende Aufreißnaht (21) aufweist.

10. Airbagvorrichtung nach Anspruch 3, dadurch gekennzeichnet, daß die Verschlußlippe (20) längs einer Randkante an einem freien Schenkelende der Profilleiste (bei 22) angeformt und mit der anderen Randkante (bei 23) eine Fügeverbindung mit dem zweiten Schenkel der Profilleiste (13) aufweist, wobei als Fügeverbindung eine Klips-, Schweiß-, Klebe- oder Nähverbindung vorgesehen ist.

11. Airbagvorrichtung nach einem oder mehreren der vorangegangenen Ansprüche, dadurch gekennzeichnet, daß die Schenkel der Profilleiste (13) vom Gasführungsrohr (4) bei der Montage überwindbare Wülste (17) od. dgl. zur Lagesicherung des Gasführungsrohrs (4) aufweisen.

12. Airbagvorrichtung nach einem oder mehreren der vorangegangenen Ansprüche, dadurch gekennzeichnet, daß das Gasführungsrohr (4) wie auch die Profilleiste (13) eine der Karosseriekontur folgende Konfiguration aufweisen.

13. Airbagvorrichtung nach einem oder mehreren der vorangegangenen Ansprüche, dadurch gekennzeichnet, daß das Gasführungsrohr (4) wie ggf. auch die Profilleiste (13) gebogen, wie streckgebogen ausgeführt sind.

14. Airbagvorrichtung nach einem oder mehreren der vorangegangenen Ansprüche, dadurch gekennzeichnet, daß die Befestigungselemente aus an der Profilleiste (13) oder an der Karosserie vormontierbare, in Reihe nebeneinander angeordnete Klammern (7) bestehen.

15. Airbagvorrichtung nach einem oder mehreren der vorangegangenen Ansprüche, dadurch gekennzeichnet, daß der gefaltete Airbag (5) mit einer die Abspannlinie (12) bei entfaltetem Airbag (5) definierende Bandsicherung (8) versehen ist.

## Claims

1. An airbag device for a motor vehicle, comprising an airbag (5) consisting of an inflatable gas cushion,
- a gas generator (2) for filling the airbag (5),
- a gas conduction pipe (4) extending through the airbag (5) and having outlet openings, and an envelope in which the airbag (5) which is laid in stacked folds is received together with the gas conduction pipe (4),
characterized in that the envelope includes a profile strip (13) of a U-shaped cross-section and having two parallel limbs and a web which connects the limbs with each other and is adapted to the shape of the gas conduction pipe (4) supported thereon, and in that the profile strip (13) together with the airbag (5) and the gas conduction pipe (4) forms a preassembled, inherently rigid construction unit which can be fastened to a vehicle body by attachment elements (7).

2. An airbag device for a motor vehicle, comprising an airbag (5) consisting of an inflatable gas cushion, a gas generator (2) for filling the airbag (5), and an envelope in which the airbag (5) which is laid in stacked folds is received,
characterized in that the envelope includes a profile strip (13) of a U-shaped cross-section and having two parallel limbs and a web which connects the limbs with each other, the envelope forming an ejection channel which defines the deployment direction of the airbag (5).

3. An airbag device for a motor vehicle, comprising an airbag (5) consisting of an inflatable gas cushion, a gas generator (2) for filling the airbag (5), and an envelope in which the airbag (5) which is laid in stacked folds is received,
characterized in that the envelope includes a profile strip (13) of a U-shaped cross-section and made as an injection-molded plastic part and having two parallel limbs and a web which connects the limbs with each other, and a closure lip (20) integrally molded with a free end of one of the limbs.

4. An airbag device for a motor vehicle, comprising an airbag (5) consisting of an inflatable gas cushion, a gas generator (2) for filling the airbag (5),
- a gas conduction pipe (4) extending through the airbag (5) and having outlet openings, and an envelope in which the airbag (5) which is laid in stacked folds is received together with the gas conduction pipe (4),
characterized in that the envelope includes a profile strip (13) of a U-shaped cross-section and having two parallel limbs and a web which connects the limbs with each other, that a shrinkage tube (18) is arranged around the gas conduction pipe (4) and the folded airbag (5) and has a defined tear-open seam (19), and that the folded airbag (5) together with the gas conduction pipe (4) and the shrinkage tube (18) arranged therearound form a preassembled unit adapted to be introduced into the profile strip (13).

5. An airbag device for a motor vehicle, comprising an airbag (5) consisting of an inflatable gas cushion, a gas generator (2) for filling the airbag (5),
- a gas conduction pipe (4) extending through the airbag (5) and having outlet openings, and an envelope in which the airbag (5) which is laid in stacked folds is received together with the gas conduction pipe (4),
characterized in that the envelope includes a profile strip (13) of a U-shaped cross-section and having two parallel limbs and a web which connects the limbs with each other, and that the limbs of the profile strip (13) diverge prior to the airbag (5) and the gas conduction pipe (4) being introduced into the profile strip (13) and are aligned approximately parallel to one another after the gas conduction pipe (4) and the airbag (5) have been introduced.

6. The airbag device according to any of the preceding claims, characterized in that the profile strip (13) with the airbag (5) and the gas conduction pipe (4) extends along one side of the vehicle from the A-pillar (14) to the C-pillar (15) and is arranged on the vehicle body in the transition region of the vehicle roof and a side wall of the vehicle.

7. The airbag device according to claim 3, characterized in that the profile strip (13) is made of a thermoplastic such as PP, PP-EPDM, TPE or PVC.

8. The airbag device according to claim 7, characterized in that the profile strip (13) is reinforced by an incorporated structure band (16) made of metal such as steel or aluminum.

9. The airbag device according to claim 3, characterized in that the closure lip (20) has a continuous tear-open seam (21).

10. The airbag device according to claim 3, characterized in that the closure lip (20) is formed integrally with a free end of a limb of the profile strip along an edge thereof (at 22) and, with the other edge (at 23) forms a joint with the second limb of the profile strip (13), the joint being provided in the form of a clip, welded, bonded or sewn joint.

11. The airbag device according to one or more of the preceding claims, characterized in that the limbs of the profile strip (13) have beads (17) or the like adapted to be overcome by the gas conduction pipe (4) during assembly to secure the gas conduction pipe (4) in its position.

12. The airbag device according to one or more of the preceding claims, characterized in that both the gas conduction pipe (4) and the profile strip (13) have a configuration which follows the contour of the vehicle body.

13. The airbag device according to one or more of the preceding claims, characterized in that the gas conduction pipe (4) and possibly also the profile strip (13) are curved, such as stretch bent.

14. The airbag device according to one or more of the preceding claims, characterized in that the attachment elements comprise clips (7) which can be preassembled on the profile strip (13) or on the vehicle body and are arranged adjacently in a row.

15. The airbag device according to one or more of the preceding claims, characterized in that the folded airbag (5) is provided with a band securement (8) which defines the span line (12) when the airbag (5) is unfolded.

## Revendications

1. Dispositif de coussin à air pour un véhicule automobile comprenant un coussin gonflable constituant un coussin à air (5),
- un générateur (2) de gaz pour le remplissage du coussin à air (5),
- un tuyau de conduite de gaz (4) s'étendant au travers du coussin à air (5), ledit tuyau de conduite de gaz (4) étant pourvu d'ouvertures de gonflage, et comportant une enveloppe dans laquelle sont recueillis le coussin à air (5), plié en plis empilés, et le tuyau de conduite de gaz (4),
caractérisé en ce que l'enveloppe présente un profilé (13) de section transversale en U avec deux branches parallèles et une traverse les reliant l'une à l'autre et adaptée à la forme du tuyau de conduite de gaz (4) qui s'y appuie, et en ce que le profilé (13) forme avec le coussin à air (5) et le tuyau de conduite de gaz (4) une unité modulaire préassemblée et de stabilité autonome, qui peut être fixée à la carrosserie du véhicule automobile par des éléments de fixation (7).

2. Dispositif de coussin à air pour un véhicule automobile comprenant un coussin gonflable constituant un coussin à air (5), un générateur (2) de gaz pour le remplissage du coussin à air (5) et une enveloppe dans laquelle est recueilli le coussin à air (5), plié en plis empilés,
caractérisé en ce que l'enveloppe présente un profilé (13) de section transversale en U avec deux branches parallèles et une traverse les reliant l'une à l'autre et en ce qu'elle forme un canal de projection qui prédéfinit la direction de déploiement du coussin à air (5).

3. Dispositif de coussin à air pour un véhicule automobile comprenant un coussin gonflable constituant un coussin à air (5), un générateur (2) de gaz pour le remplissage du coussin à air (5), et une enveloppe dans laquelle est recueilli le coussin à air (5), plié en plis empilé,
caractérisé en ce que l'enveloppe présente un profilé (13), formé par une pièce en matière plastique moulée par injection, de section transversale en U avec deux branches parallèles et une traverse les reliant ainsi qu'une lèvre de fermeture (20) formée sur une extrémité libre d'une branche.

4. Dispositif de coussin à air pour un véhicule automobile comprenant un coussin gonflable constituant un coussin à air (5), un générateur (2) de gaz pour le remplissage du coussin à air (5),
- un tuyau de conduite de gaz s'étendant au travers du coussin à air (5), ledit tuyau de conduite de gaz (4) étant pourvu d'ouvertures de gonflage, et comportant une enveloppe dans laquelle sont recueillis le coussin à air (5), plié en plis empilés, et le tuyau de conduite de gaz (4),
caractérisé en ce que l'enveloppe présente un profilé (13) de section transversale en U avec deux branches parallèles et une traverse les reliant l'un à l'autre, et en ce qu'un tube à contraction (18) est disposé autour du tuyau de conduite de gaz (4) et le coussin à air (5) plié et qu'il présente une couture de déchirure (19) définie et en ce que le coussin à air (5) forme avec le tuyau de conduite de gaz (4) et avec le tube à contraction (18) disposé autour d'eux une unité préassemblée et pouvant être mise en place dans le profilé (13).

5. Dispositif de coussin à air pour un véhicule automobile comprenant un coussin gonflable constituant un coussin à air (5), un générateur (2) de gaz pour le remplissage du coussin à air (5),
- un tuyau de conduite de gaz s'étendant au travers du coussin à air (5), ledit tuyau de conduite de gaz (4) étant pourvu d'ouvertures de gonflage et avec une enveloppe, dans laquelle sont recueillis le coussin à air (5), plié en plis empilés, et le tuyau de conduite de gaz (4),
caractérisé en ce que l'enveloppe présente un profilé (13) de section transversale en U avec deux branches parallèles et une traverse les reliant l'une à l'autre, et en ce qu'avant la mise en place du coussin à air (5) et du tuyau de conduite de gaz (4) dans le profilé (13), les branches du profilé (13) divergent et qu'elles sont presque parallèles l'une à l'autre, après la mise en place du tuyau de conduite de gaz (4) et du coussin à air (5).

6. Dispositif de coussin à air selon l'une des revendications précédentes, caractérisé en ce que le profilé (13), comportant coussin à air (5) et tuyau de conduite de gaz (4), s'étend le long d'un côté du véhicule automobile de la colonne A (14) correspondante à la colonne C (15) et est disposé dans la zone intermédiaire située entre le toît du véhicule automobile et une paroi latérale de la carrosserie du véhicule automobile.

7. Dispositif de coussin à air selon la revendication 3, caractérisé en ce que le profilé (13) est constitué en une matière plastique thermodurcissable, comme le PP, le PP-EDPM, le TPE ou le PVC.

8. Dispositif de coussin à air selon la revendication 7, caractérisé en ce que le profilé (13) est renforcé par un feuillard à structure de support (16), intercalé, constitué en métal, comme l'acier ou l'aluminium.

9. Dispositif de coussin à air selon la revendication 3, caractérisé en ce que la lèvre de fermeture (20) présente une ligne de déchirure (19) continue.

10. Dispositif de coussin à air selon la revendication 3, caractérisé en ce que la lèvre de fermeture (20), le long d'une arête de bord, est formée sur une extrémité libre d'une branche du profilé (13) (en 22) et en ce qu'elle présente avec l'autre arête de bord un raccord d'assemblage avec la seconde branche du profilé (13) (en 23), un raccord par clip, par soudure, par collage ou par couture étant prévu comme raccord d'assemblage.

11. Dispositif de coussin à air selon l'une ou plusieurs des revendications précédentes, caractérisé en ce que les branches du profilé (13) présentent des renflements (17) ou similaires, pouvant être franchis lors du montage par le tuyau de conduite de gaz (4) pour la fixation en position du tuyau de conduite de gaz (4).

12. Dispositif de coussin à air selon l'une ou plusieurs des revendications précédentes, caractérisé en ce que le tuyau de conduite de gaz (4) ainsi que le profilé (13) présentent une configuration suivant le contour de la carrosserie.

13. Dispositif de coussin à air selon l'une ou plusieurs des revendications précédentes, caractérisé en ce que le tuyau de conduite de gaz (4) ainsi que, le cas échéant, également le profilé (13) sont réalisés en forme courbée, telle que obtenue par extension/courbure.

14. Dispositif de coussin à air selon l'une ou plusieurs des revendications précédentes, caractérisé en ce que les éléments de fixation consistent en des agrafes, pouvant être montées sur le profilé (13) ou sur la carrosserie, et disposées en série les unes à côté des autres.

15. Dispositif de coussin à air selon l'une ou plusieurs des revendications précédentes, caractérisé en ce que le coussin à air (5) est pourvu d'un ruban de fixation (8) définissant une ligne de torsion (8) quand le coussin à air (5) est déployé.
